# EUROPEAN PATENT SPECIFICATION

(11) **EP 3 126 112 B1**
(45) Date of publication and mention of the grant of the patent: **24.06.2020**
(21) Application number: 15773073.0
(22) Date of filing: 27.03.2015
(51) Int. Cl.: B29C 33/12, B29D 11/00, G02C 7/00, B29C 33/38, G02B 1/04, B33Y 80/00, B33Y 10/00, B29C 64/00, B29L 11/00, G02C 7/04

(54) **ADDITIVE MANUFACTURING OF MOLDS AND METHODS OF MAKING MOLDS AND DEVICES THEREFROM**
GENERATIVE FERTIGUNG VON FORMEN UND VERFAHREN ZUR HERSTELLUNG VON FORMEN UND VORRICHTUNGEN DARAUS
FABRICATION ADDITIVE DE MOULES ET PROCÉDÉS DE FABRICATION DE MOULES ET DISPOSITIFS OBTENUS

(30) Priority: 31.03.2014 US 201461973012 P
(43) Date of publication of application: 08.02.2017
(73) Proprietor: CRT Technology, Inc., Mesa, Arizona 85204 (US)
(72) Inventor: MEYERS, William E., Scottsdale, Arizona 85259 (US)
(74) Representative: Hargreaves, Timothy Edward
(86) International application number: PCT/IB2015/052284
(87) International publication number: WO 2015/151004

(56) References cited:
- WO-A1-2015/147758
- WO-A2-2004/039554
- WO-A2-2004/039554
- WO-A2-2005/005121
- US-A- 5 120 121
- US-A- 6 146 558
- US-A1- 2006 145 372
- US-A1- 2009 088 055

## Description

### BACKGROUND

### Field

The present disclosure relates generally to improved molds and methods of manufacturing mold sections for the production of molded devices.

### Discussion of the Related Art

The manufacture of customized precision solid objects is generally expensive and time consuming. The costs associated with the manufacture of custom objects is highly dependent on the number of stock keeping units ("SKUs") or unique designs to be produced in addition to the configuration or surface character required of each object.

For example, traditional machining methods such as lathing or milling can be used to produce each manufactured object; however, for objects with complex or irregular surface geometries and/or high precision or tolerance requirements, the costs of production using precision lathes and mills is likely to be prohibitively high if a high number of design variants and individual SKUs are required.

Thus, injection molding and cast molding manufacturing methods are often used to reduce cost and improve production rates. However, even these more economical manufacturing methods may not be cost effective in cases of large numbers of unique designs where each design has a low production run number, such as production of therapeutic optical devices customized for individual patients' eyes.

Recently, additive manufacturing processes (also referred to as rapid prototyping, rapid manufacturing, freeform fabrication, or solid freeform fabrication), including popularly known 3D printing technology, have become increasingly refined and permit intricate configurations to be created from software-generated digital models or computer-aided design ("CAD") data of the desired object. However, the various techniques of additive manufacturing and 3D printing have practical limitations in terms of compositions of the materials that may be used, the precision with which objects may be rendered, and the time required to complete production of high-precision additively manufactured object.

Objects created by 3D printing techniques are often comprised of polymeric "inks" compatible with an extrusion printing process, though other classes of materials may be used depending on the exact printing or additive manufacturing method employed. Additionally, printing precision or surface smoothness may be limited, with material deposited at relatively low resolution resulting in a stepped appearance, typically with about 50 micron resolution.

Thus, post-processing of objects produced using 3D printing is often required to achieve a smoothened surface profile or desired surface finish quality. However, post-processing of complex geometric surfaces is often not feasible. Printers and other additive manufacturing equipment capable of increased resolution suitable for optically critical surface precision are becoming available, but with an associated increase in expense and time required to complete production. When very high-resolution 3D printers or other material deposition techniques are employed, the cost and time consumption rapidly increase if the bulk of the object manufactured by additive manufacturing is large. It is expensive and inefficient to use high precision printers to create objects where production of the primary object bulk does not require a high precision additive manufacturing capability.

Thus, there is a need in the art for systems and methods for production of large numbers of manufactured articles having unique individual specifications but low production runs, wherein each manufactured article can be cost-effectively produced with high precision using a combined manufacturing approach. WO 2005/005121 describes a method of manufacturing a mold for producing a customised optical surface. WO 2004/039554 describes a lithographic method for manufacturing molds and mold inserts for use in producing ophthalmic lenses.

### SUMMARY

Aspects of the invention are in accordance with the appended claims. The present disclosure provides devices and methods for manufacturing devices requiring geometrically complex and/or precise surfaces, such as optical devices with optically precise surfaces and/or geometrically complex surface features or configurations. In various embodiments, optical device mold sections are provided that comprise a mold insert with an optically precise surface and/or a surface feature with a labyrinthine geometry added to a mold section support by polyjet 3D printing process. The mold section support component of a mold section need not be manufactured using a high precision additive manufacturing method, but instead may be produced using a lower precision and lower cost method such as injection molding or traditional machining approaches. In various embodiments, processes are provided for preparing a mold section comprising an optically precise surface using a polyjet 3D printing process and for molding an optical device using a mold section prepared in accordance with the present disclosure.

### BRIEF DESCRIPTION OF THE DRAWINGS

The accompanying drawings are included to provide a further understanding of the disclosure and are incorporated in and constitute a part of this specification, illustrate embodiments of the disclosure, and together with the description serve to explain the principles of the disclosure.
Figure 1 illustrates a cross-section of an optical device mold in accordance with the present disclosure; Figure 2 illustrates a cross-section of an optical device mold in accordance with the present disclosure;
Figure 2 illustrates a cross-section of an optical device mold in accordance with the present disclosure;
Figure 3 illustrates a view of a contact lens manufactured using a mold in accordance with the present disclosure;
Figure 4 illustrates a method of preparing an optical device mold section in accordance with the present disclosure; and
Figure 5 illustrates a method of cast molding an optical device in accordance with the present disclosure.

### DETAILED DESCRIPTION

The present disclosure relates to mold sections prepared using additive manufacturing processes, methods for preparing mold sections used for the production of various devices, and methods of molding various devices, for example, optical devices. Persons skilled in the art will readily appreciate that various aspects of the present disclosure can be realized by any number of devices and methods configured to perform the intended functions. Stated differently, other devices and methods can be incorporated herein to perform the intended functions. It should also be noted that the accompanying drawing figures referred to herein are not all drawn to scale, but may be exaggerated to illustrate various aspects of the present disclosure, and in that regard, the drawing figures should not be construed as limiting. Likewise, different surface shading may be used throughout the figures to denote different parts but not necessarily to denote the same or different materials. Finally, although the present disclosure can be described in connection with various principles and beliefs, the present disclosure should not be bound by theory.

As used herein, the term "approximate" is used to describe a geometry or profile of an object that is similar to the geometry or profile of another object. "Approximate" may be used to describe the geometry of a first object or specification that is precise or imprecise with respect to the corresponding geometry or a negative of the corresponding geometry of a second object or specification.

As used herein, the term "intermediate surface" is used to describe a surface of an object facing the interior of a mold. As used herein, an "intermediate surface" need not come into direct contact with a composition or object that is molded using the mold or mold section comprising the intermediate surface. As described in greater detail herein, an intermediate surface may be partially or entirely covered with a mold insert.

As used herein, the term "mold insert" is used to describe a mold component or mold element that is applied to mold, mold section, molding tool or other molding device using an additive manufacturing process. In accordance with various embodiments, a "mold insert" is applied to an intermediate surface of a mold section. As described in greater detail herein, a "mold insert" may comprise an optically precise surface, defined below.

As used herein, the term "optically precise surface" is used to describe a surface that comes into direct contact with a composition or object that is molded and is suitable to provide an optical quality or near optical quality surface (i.e., a surface providing a desired optical geometry and/or an optical surface free of undesired optical aberrations) to a molded object. As used herein, however, the term "optically precise surface" should not be construed as necessarily limited to surfaces used to mold an optical device. In accordance with various embodiments, a mold having an optically precise surface may be used to produce articles or objects other than optical devices that likewise require a highly precise surface quality to be conferred by the mold.

As used herein, the term "additive manufacturing" encompasses any method or process whereby a three-dimensional object is produced by addition of a substrate or material to an object, such as by addition of successive layers of a material to an object to produce a manufactured product having an increased mass or bulk at the following completion of the additive manufacturing process. In contrast, traditional manufacturing by machining or tooling typically relies on material removal or subtractive processes, such as cutting, lathing, drilling, grinding, or the like, to produce a final manufactured object that has a decreased mass or bulk relative to the starting work piece. As used herein, the term "additive manufacturing" should not be construed to encompass fabrication or joining of previously formed objects.

As used herein, the term "labyrinthine geometry" and variations thereof (i.e., "labyrinthine surface feature geometry") may be used to describe an object or features of an object or article of manufacture having a highly complex geometry (i.e., a geometry that resembles a labyrinth in terms of its complexity). As used herein, "labyrinthine geometry" denotes a structure or surface having a geometry or configuration with a level of intricacy or complexity that is difficult or impossible to achieve for a single-component manufactured item using traditional, non-additive manufacturing techniques such as milling, machining, casting, molding, and the like. For example, "labyrinthine geometry" may be used to describe an article or object comprising a partially or completely enclosed void space within the material comprising the article or object. However, the term should not be construed as necessarily limited to enclosed void spaces or tunnels. Rather, surface feature configurations including features that are raised or in relief relative to the adjacent surface may likewise comprise "labyrinthine geometries." The term "labyrinthine geometry" may be used to refer to structures or surfaces that are regular or irregular, and/or symmetrical or asymmetrical with respect to any plane or axis of symmetry.

Moreover, as used to describe a surface, the term "labyrinthine geometry" should not be construed to be mutually exclusive of the term "optically precise surface." For example, as used herein, a surface may possess the qualities of being both an optically precise surface in addition to having a labyrinthine geometry. For example, a mold in accordance with various embodiments may have a surface that is optically precise while comprising raised surface features having a labyrinthine geometry, such as surface features that might be used to form a pattern of spiral channels recessed in the surface of a device produced using the mold, as described in greater detail below.

A variety of additive manufacturing technologies will be known to a person of skill in the art. Such technologies include, for example, fused deposition modeling, polyjet 3D printing, electron beam freeform fabrication, direct metal laser sintering, electron-beam melting, selective laser melting, selective heat sintering, selective laser sintering, stereolithography, multiphoton photopolymerization, and digital light processing. These technologies may use a variety of materials as substrates for an additive manufacturing process, including various plastics and polymers, metals and metal alloys, ceramic materials, metal clays, organic materials, and the like. Any additive manufacturing technology and substrate suitable for the production of optical device molds or intermediate mold surfaces and compatible with the molding of optical device materials, or compatible with the manufacturing of molds that may be subsequently used to mold optical materials and devices, is within the scope of the present invention. Likewise, other methods of additive manufacturing and associated materials, whether presently available or yet to be developed, are intended to be included within the scope of the present disclosure.

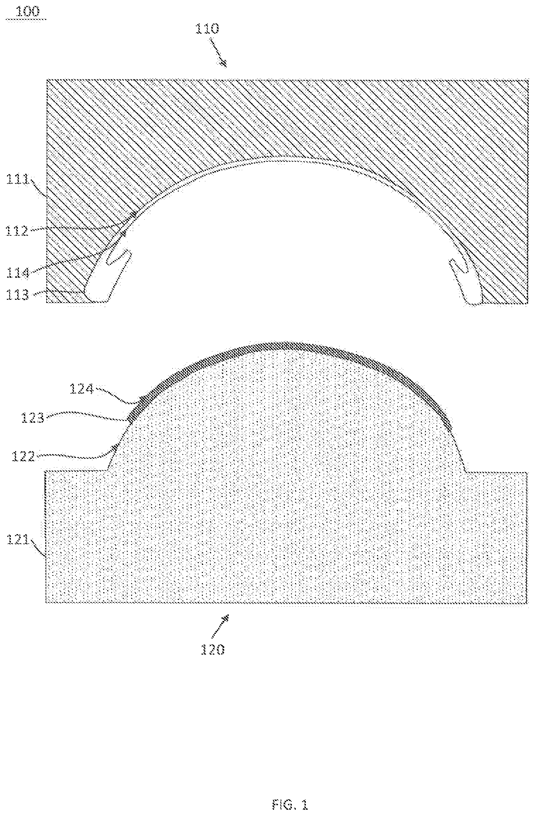

With reference now to FIG. 1, an optical device mold 100 comprising two separated mold sections in accordance with various embodiments of the present disclosure is illustrated. Molds used for cast molding of an optical device generally comprise a pair of molding tools or mold sections, such as a first mold section 110 and a second mold section 120. As used herein, the term "mold section" may comprise any portion or component of a mold or molding tool. A mold section may comprise a single, integrally formed component, or a mold section may comprise multiple components that are permanently or interchangeably coupled to one another. Permanent coupling of a first component to a second component can include attachment by processes such as fusing, welding, or otherwise adhering a first object to a second object, and can include processes whereby a second component is added and attached to a first component by an additive manufacturing process, as described above.

In accordance with various embodiments, one or more of the mold sections comprising an optical device mold may comprise a mold insert added to a mold section support by an additive manufacturing process. As shown in FIG. 1, an optical device mold 100 can comprise a first mold section 110 and a second mold section 120. In accordance with various embodiments, first mold section 110 comprises a first mold section support 111. Mold section support 111 may comprise an intermediate surface 112 with a geometry configured to approximate a surface geometry of a designed optical device. In the illustrated embodiment shown in FIG. 1, intermediate surface 112 has a surface geometry that approximates the geometry of the anterior surface (i.e., the surface oriented away from the surface of the eye) of a designed optical device to be molded using a finished first mold section 110 following addition of a mold insert 113, described in greater detail below.

Optical device mold 100 further comprises second mold section 120. Similarly to first mold section 110 described above, second mold section 120 can comprise a second mold section support 121. The second mold section support 121 may likewise comprise an intermediate surface 122. As shown in FIG. 1, second mold section intermediate surface 122 has a surface geometry configured to approximate the geometry of the posterior surface of a designed optical device. In various embodiments, a finished second mold section 120 may comprise a mold insert 123, as further described below.

A designed optical device to be manufactured using a mold section in accordance with the present disclosure may be specified by a model or data, such as a CAD file. In various embodiments, a mold section support may be designed and manufactured based on the configuration of the optical device to be manufactured, or it may be selected from a discrete number of manufactured mold section supports offering a range of possible intermediate surface geometries. In accordance with various embodiments, a mold section support is selected so that an intermediate surface approximates a surface geometry of the designed optical device while providing a platform or scaffolding to which further mold material may be added by an additive manufacturing process. Selection of the mold section support can therefore take into account the capabilities and tolerances of the additive manufacturing process that will be used to apply the mold insert to the intermediate surface, thereby providing an optically precise surface geometry that is a negative of the designed optical device surface geometry to be molded while minimizing the volume and/or time required for additive manufacturing of the mold insert.

In accordance with various embodiments, a mold section support may be configured with an intermediate surface geometry suitable for production by an economical process such as injection molding or subtractive manufacturing with minimal material waste and maximum production efficiency. As mentioned above, a range of mold section supports having a variety of discrete intermediate surface geometries, such as spherical geometries of different radii, or different frustoconical shapes terminating in spherical sections, may be provided. In accordance with various embodiments, an intermediate surface may comprise a radially symmetrical geometry compatible with efficient tooling of a mold section support itself or of a mold used for production of a mold section support. Any mold surface geometry having a configuration suitable for addition of a mold insert by an additive manufacturing process and/or compatible with efficient and cost effective production of a mold section support is within the scope of the present disclosure.

In accordance with various embodiments, any mold section used to form any surface of an optical device may be configured as described above. Moreover, although both mold sections 110 and 120 of optical device mold 100 illustrated in FIG. 1 each comprise mold inserts 113 and 123, respectively, each mold section of an optical device mold in accordance with various embodiments need not comprise a mold insert as described herein. Instead, in various embodiments, one section of mold can comprise a mold insert, while a second mold section may be manufactured using traditional milling or manufacturing processes and may not comprise a mold insert or any other mold component or surface manufactured by an additive manufacturing process. In accordance with various embodiments of the present disclosure, at least one mold section of an optical device mold comprises a mold insert produced by an additive manufacturing process.

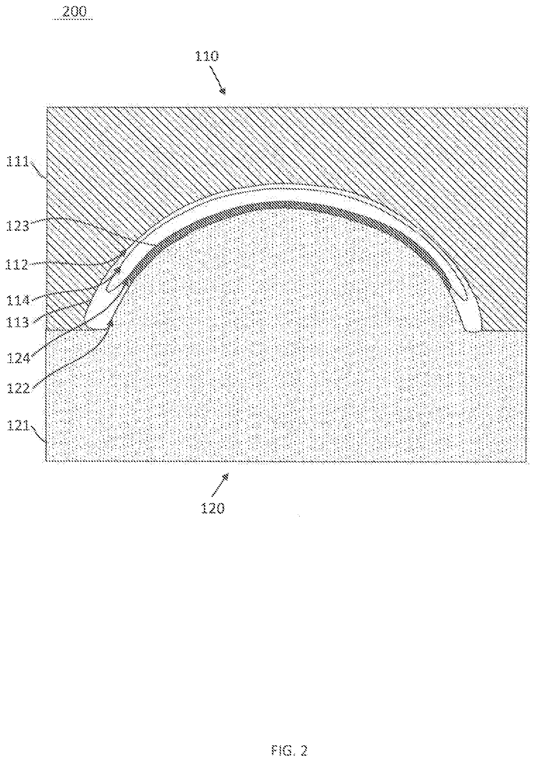

An assembled optical device mold 200 comprising first mold section 110 and second mold section 120 is illustrated in FIG. 2. As shown in assembled mold 200, mold section 110 used to form an anterior surface of an optical device may comprise mold insert 113 added to mold section support 111 by an additive manufacturing process. In accordance with various embodiments, a mold insert added to a mold section may be configured to form or contribute to the formation of more than one surface of an optical device molded with the mold section. As described above, and with reference now to both FIG. 1 and FIG. 2, mold insert 113 is configured to form the anterior surface of an optical device formed with mold section 110. However, the optically precise surface 114 of first mold insert 110 is further configured to form the peripheral edge of an optical device, as well as a portion of the posterior surface of an optical device near its peripheral edge. In various embodiments, the mold insert 123 of second mold section 120 may be configured with an optically precise surface 124 that forms a substantially continuous surface with surface 114 of the first mold section when mold sections 110 and 120 are in an assembled configuration, as shown in FIG. 2.

In accordance with various embodiments, the location with respect to the molded optical device at which an edge or surface of a first mold insert meets an edge or surface of a second mold insert or other mold section surface may be designed or configured to accommodate various factors, such as, for example, removal of the molded device from the mold sections, or any optical surface imprecisions that may occur in the region of a mold insert edge as a function of mold section manufacturing, assembly, and/or lens casting. For example, the junction of a first mold insert and a second mold insert or other mold section surface in an assembled mold may be located at a position along the posterior surface of the designed optical device that is not in contact with ocular tissue, such as a portion of a contact lens landing zone peripheral to the point of tangency with the ocular tissue. Any of a variety of mold insert configurations and combinations are possible, in particular due to the advantages of additive manufacturing processes described herein, and are within the scope of the present invention.

Mold surface configurations such as those illustrated for mold insert 113 near the peripheral edge-forming region of the mold may be difficult and/or costly to manufacture using traditional machining methods. However, in accordance with various embodiments of the present disclosure, these and other surface features that would be challenging or impossible to produce with traditional milling processes may be produced using the additive manufacturing processes described herein. Likewise, various other configurations are possible and within the scope of the present disclosure, particularly due to the unique capacity of 3D printing and other additive manufacturing technologies to produce voids, cavities, intricate and/or irregular surface features, and other labyrinthine geometric configurations that are difficult or impossible to achieve with various traditional milling techniques.

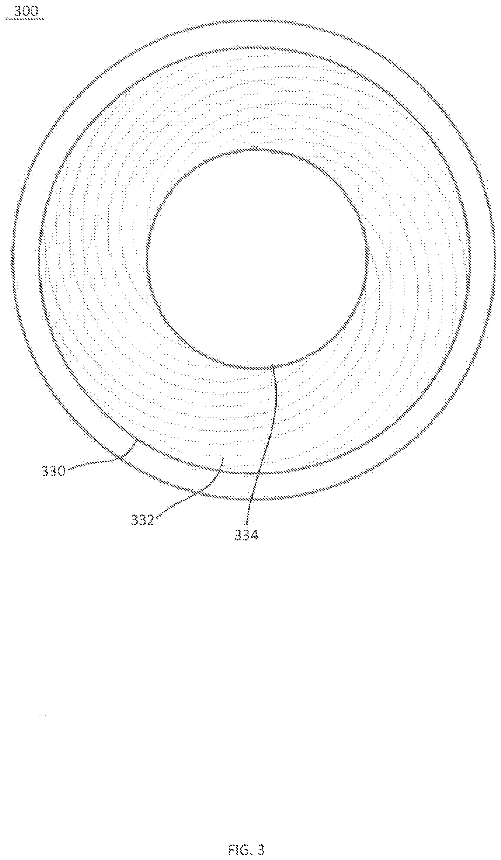

For example, in various embodiments, a mold or mold insert may be produced with a labyrinthine surface feature geometry comprising a pattern of spiral surface features suitable to form fine channels in a surface of a device molded with the mold insert. Referring to FIG. 3, a diagram of contact lens 300 comprising posterior (i.e., facing toward the eye) surface features that might be produced as a negative of such a mold or mold insert is illustrated. Contact lens 300 comprises a peripheral zone 330 having a network of intersecting spiral channels 332 each extending from a peripheral aspect of peripheral zone 330 to a peripheral aspect of a central zone 334. Spiral channels 332 may be of a cross-sectional profile and/or dimension suitable enhance wetting and/or lacrimal fluid distribution along the posterior surface of the lens 300. In various embodiments, a similar configuration might be produced for a lens component wherein the channels of the finished lens manufactured with the component are located in the interior of the lens and facilitate gas exchange between a peripheral aspect of the lens and the central zone 334.

The intersecting spiral configuration of channels 332 may provide enhanced opportunities for gas and/or fluid flow along the channels, as a blockage at a point in any given channel does not occlude the function of the channel due to the numerous intersections between channels. However, the labyrinthine geometry of raised intersecting spiral surface features required to form the channels may be prohibitively challenging to produce using manufacturing techniques other than additive manufacturing approaches, due to functional and/or economical limitations of traditional manufacturing techniques. Likewise, molds or mold inserts having other labyrinthine geometries may be produced using additive manufacturing methods in accordance with various embodiments, with the molds or mold inserts designed and manufactured for production of any optical or non-optical devices for which high precision surfaces and/or highly complex surface feature geometries are required.

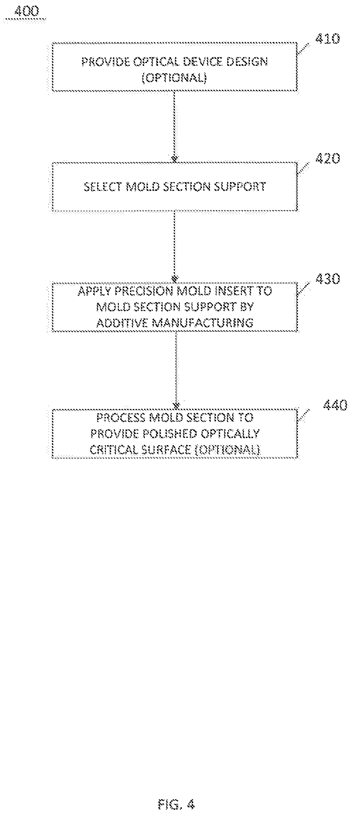

In accordance with various embodiments and with reference now to FIG. 4, a method for preparing an optical device mold section 400 is provided. In various embodiments, a method of preparing an optical device mold section may comprise providing an optical device design 410, for example, as a CAD file representing a three-dimensional model of a designed optical device such as a contact lens. A CAD file or other data representation of an optical device model will generally be required to generate a computer file suitable to direct an additive manufacturing process; however, in accordance with various embodiments, providing a CAD file or other three-dimensional model is optional and not necessarily required to prepare an optical device mold section.

In various embodiments, method 400 may comprise selection of a mold section support 420. As described briefly above, a mold section support may be selected based on information regarding the geometric configuration of a surface of the designed optical device to be molded by the finished mold section produced by method 400. In various embodiments, a mold section support may have an intermediate surface with a geometry configured to approximate the surface geometry of the designed optical device at one or more surfaces the prepared mold section will contribute to forming. As previously defined herein, the intermediate surface of the mold section support faces toward the interior of a mold cavity and contributes to molding of a surface of the optical device produced with the mold section by providing physical support for a mold insert. A portion of the intermediate surface of a mold section support may come into direct contact with an optical device forming composition molded in a molding process, and the intermediate surface may be configured to confer a portion of an optically precise surface to a molded optical device. In various embodiments, the intermediate surface of a mold section support may be completely covered or encased in a mold insert applied to the surface using an additive manufacturing process. In such embodiments, the intermediate surface of the mold section does not directly contact an optical device forming composition during molding, but instead provides a support platform for the mold insert used to confer the optically precise surface to the molded optical device.

In accordance with various embodiments, regardless of whether the intermediate surface of the mold section support contacts the molded optical device forming composition, the mold section support is selected to provide a surface geometry that approximates the surface geometry of the designed optical device to be molded while accommodating addition of a mold insert to at least a portion of the intermediate surface. As previously described, the mold section support may be selected from a predetermined range of mold section supports offering various discrete geometries, or the mold section support may be manufactured to approximate the designed optical device using an economical and/or lower precision manufacturing approach (i.e., as compared to precision additive manufacturing processes) suitable to provide the mold section support.

In accordance with various embodiments, method 400 may comprise applying a mold insert to a mold section support by an additive manufacturing process 430. In various embodiments, applying a mold insert comprises manufacturing of the mold insert in place on the intermediate surface of the mold section support by an additive manufacturing process as previously described herein. In accordance with various embodiments, the mold insert is manufactured to provide an optically precise surface geometry suitable for conferring an optical quality surface to an object molded with the mold section. In various embodiments, a mold insert may be manufactured to provide a surface feature comprising a labyrinthine geometry.

In various embodiments, an additive manufacturing process may comprise application of a mold insert material to an intermediate surface. Application of the mold insert material by additive manufacturing may comprise building the mold insert in layers of mold insert material. In accordance with various embodiments, the additive manufacturing process comprises successive addition of two or more layers of a mold insert material to the intermediate surface of a mold section support. The thickness of each layer of mold insert material applied during additive manufacturing of a mold insert may vary dependent on the mold insert material and the additive manufacturing process used to manufacture the mold insert. In accordance with various embodiments, the mold insert material may be added at a layer thickness (i.e., depth) of less than about 50 µm, or at a layer thickness of less than about 15 µm, or at a layer thickness of less than about 1.0 µm.

Likewise, the overall thickness of a mold insert following completion of additive manufacturing may vary in accordance with various embodiments, both in terms of the uniformity of the thickness and in terms of the maximum thickness for a mold insert of variable thickness. For example, in various embodiments, a mold insert may comprise a coating of mold insert material added at a uniform thickness with respect to the intermediate surface of the mold section support. In various other embodiments, the mold insert may have a variable overall thickness following completion of the additive manufacturing process 430. In accordance with various embodiments, regardless of the uniformity or variability of the mold insert thickness, the maximum thickness of the mold insert is less than about 5000 µm. In various other embodiments, the maximum thickness of the mold insert may be less than about 250 µm, or less than about 10.0 µm.

In accordance with various embodiments, the mold insert may be configured to provide an optically precise surface with an asymmetric geometry or labyrinthine surface feature geometry. In accordance with various embodiments of the present disclosure, the additive manufacturing processes used to apply the mold insert provides several advantages over traditional milling techniques with respect to their capacity to rapidly and economically provide complex geometrical configurations that are difficult or costly to produce using tradition milling, including radially asymmetrical geometries or cavities or pockets. In various embodiments, a mold insert may be manufactured having any suitable three-dimensional shape or configuration that may be designed or measured for an optical device. For example, the posterior and/or anterior surfaces of a contact lens may be designed to provide precise fit, refractive error correction, and/or tissue reshaping based on measurements of the ocular tissue to be fitted and/or the refractive error to be corrected and/or regulated, and a mold section suitable to mold an optical device surface may be prepared as described herein to confer any designed contact lens surface geometry.

In various embodiments, the precision of the additive manufacturing process used to apply the mold insert is suitable to confer an optical quality surface precision and/or geometry to the mold insert without a need for any further processing. However, in accordance with various embodiments, a method 400 may comprise a step of post-processing of a mold section 440 to increase a surface precision or smoothness of an optical quality surface. In various embodiments, post-processing may be performed to increase the resolution of a surface formed by additive manufacturing in accordance with any of a variety of methods that will be known to a person of skill in the art. Likewise, in accordance with various embodiments, mechanical polishing or abrasive finishing techniques may be used to polish a surface of a mold section to a desired surface smoothness. In various embodiments, a mold insert and/or an intermediate surface may be dimensionally oversized by a predetermined dimension or tolerance to compensate for a planned degree of abrasive wear that may occur in a polishing process. Similarly, in various embodiments, a mold insert may be manufactured in any manner necessary to compensate for any post-manufacturing process required. However, in accordance with various embodiments, the mold insert is not subjected to further tooling or machining to provide or improve an optically precise surface applied by additive manufacturing.

In accordance with various embodiments, a mold insert added to a mold section support comprises a material compatible with the additive manufacturing process used to prepare the mold section. Likewise, the mold section support and/or the mold insert may comprise one or more materials that are compatible with molding an optical device forming composition, or with molding any other composition that may then be used as a mold for an optical device forming composition. In accordance with various embodiments, a mold insert may comprise the same material as the mold section support, and the mold insert may become attached, fused, sintered, welded, or otherwise permanently affixed (i.e., by any chemical, mechanical or thermal means) to the mold section support in response to the additive manufacturing process used to add the mold insert to the mold section support. In accordance with various other embodiments, a mold insert may comprise a different material from the mold section support. In various embodiments, a mold insert and/or a mold section support may comprise a material that may be chemically removed or dissolved away from an object molded using the mold section comprising the mold insert and/or the mold section support. Stated another way, in various embodiments, following molding of an optical device or a mold using the mold section, the mold section or a portion thereof may be separated from the molded object by a solvent while leaving the molded object intact.

In accordance with various embodiments, an optical element may be additively manufactured on a mold section support, with the optical element becoming a component of the optical device subsequently formed with the mold. Similarly, the devices and methods of the present disclosure may be used to manufacture precision molds for molding optical device elements that are later assembled into a completed optical device. For example, various sections of an optical device "sandwich" that might be difficult to mold or produce using traditional milling techniques may be produced using the mold sections and processes of the present disclosure due to various advantages of an additive manufacturing process.

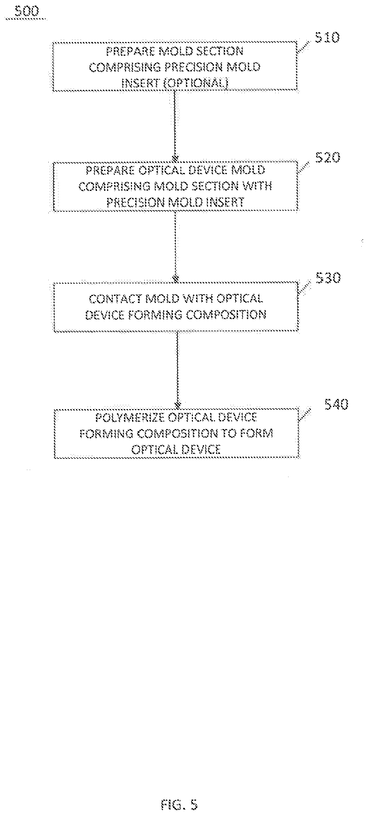

In accordance with various embodiments and as illustrated in FIG. 5, a method of molding an optical device 500 is provided. In various embodiments, a method 500 may comprise preparing a mold section comprising a mold insert 510, assembling an optical device mold comprising a mold section with a mold insert 520, contacting the assembled mold with an optical device forming composition 530, and polymerizing the optical device forming composition to form an optical device 540.

In accordance with various embodiments, method 500 may optionally comprise preparation of a mold section comprising a mold insert with an optically precise surface applied to a mold section by an additive manufacturing process, as described above with reference to FIG. 4. However, in various embodiments, a mold section comprising a mold insert may be prepared independently from method 500, and the mold section may simply be separately obtained or provided for assembly into an optical device mold in step 520, described below.

In various embodiments, method 500 may comprise assembling an optical device mold comprising a mold section with a mold insert 520. In various embodiments, assembling an optical device mold comprises assembling a first mold section and a second mold section configured to receive each other and to form a cavity between a first mold section intermediate surface and a second mold section intermediate surface. In accordance with various embodiments, at least one of the first mold section intermediate surface and the second mold section intermediate surfaces comprises a mold insert with an optically precise surface applied to a mold section support by an additive manufacturing process, as described in detail above.

In various embodiments, method 500 may comprise contacting the assembled mold with an optical device forming composition 530. In accordance with various embodiments, the cavity formed by assembly of the mold sections may be filled with an optical device forming composition. Any flowable or moldable optical device forming composition suitable for forming a polymerized optical device is within the scope of the present disclosure. For example, an optical device forming composition may comprise one or more of fluorosilicon acrylate, silicon acrylate, polymethylmethacrylate, a silicon hydrogel, or another suitable material. In general, any gas permeable and/or biocompatible optical material is suitable for use herein. The details of various optical device forming compositions and conditions for polymerization are well known in the art and outside of the scope of the present disclosure.

Following introduction of an optical device forming composition into the assembled mold, method 500 may further comprise polymerizing or otherwise hardening the optical device forming composition in the mold to form an optical device. In accordance with various embodiments, the polymerized optical device will comprise one or more optical surfaces having a geometry conferred to the device by an optically precise surface of a mold insert added to a mold section by an additive manufacturing process. Stated differently, at least a portion of an optical surface of an optical device molded in process 500 will comprise an optical surface geometry that is a negative of an optically precise surface of a mold insert added to a mold section in the assembled mold by an additive manufacturing process.

In accordance with various embodiments, manufacturing of mold sections having mold inserts and optically precise surfaces for formation of optical devices with an additive manufacturing process may be compatible with clean room and/or aseptic conditions, thereby eliminating or reducing any need for post-processing of a molded optical device for purposes of cleanliness or sterility. In various embodiments, optical devices produce using the devices and method of the present disclosure may be suitable for packaging directly following polymerization and removal from the mold.

It will be apparent to those skilled in the art that various modifications and variations can be made in the present disclosure without departing from the spirit or scope of the disclosure. For example, while the present disclosure is described primarily with reference to static or cast molding of contact lenses, the molding devices producing using the methods of the present disclosure may be used to produce contact lenses using any known casting or molding process for contact lens production, including, for example spin casting. Furthermore, although the devices and methods of the present disclosure have been described primarily with reference to the manufacture of optical devices, the principles disclosed herein can be applied to various other non-optical devices requiring precise and/or geometrically complex or intricate surfaces. For example, the devices and methods of the present disclosure may be applicable to items such as custom designed prosthetic and reconstructive devices, dental implants, scaffolding for tissue growth, custom fit protective wear, implantable electrodes and sensors, micro-Velcro attachment surfaces, artistic or ornamental creations, micro-scale labeling or personalization, custom electronic circuits, or the like. Thus, it is intended that the present disclosure cover the modifications and variations of this disclosure provided they come within the scope of the appended claims and their equivalents.

Likewise, numerous characteristics and advantages have been set forth in the preceding description, including various alternatives together with details of the structure and function of the devices and/or methods. The disclosure is intended as illustrative only and as such is not intended to be exhaustive. It will be evident to those skilled in the art that various modifications may be made, especially in matters of structure, materials, elements, components, shape, size and arrangement of parts including combinations within the principles of the invention, to the full extent indicated by the broad, general meaning of the terms in which the appended claims are expressed. To the extent that these various modifications do not depart from the scope of the appended claims, they are intended to be encompassed therein.

## Claims

1. An optical device mold (100) comprising:
a mold section (110) comprising a mold section support (111), wherein the mold section support (111) comprises an intermediate surface (112) having a surface geometry configured to approximate a surface geometry of a designed optical device;
an additive mold insert (113) comprising an optically precise surface (114) attached to the intermediate surface (112),
wherein the additive mold insert is formed by a polyjet 3D printing process, and wherein the additive mold insert (113) is configured to provide an optically precise surface geometry to an optical device molded with the mold (100).

2. The mold of claim 1, wherein the mold insert (113) further comprises a surface feature having a labyrinthine geometry.

3. The mold of claim 1, wherein the mold insert (113) is attached to the intermediate surface (112) of the mold section support (111) by an additive manufacturing process.

4. The mold of claim 1, wherein the mold comprises two or more mold sections (110, 120), and wherein each mold section (110, 120) further comprises a mold insert (113).

5. A method of preparing an optical device mold section (110) comprising:
selecting a first mold section support (111) having a first intermediate surface (112) with a first intermediate surface geometry configured to approximate a designed optical device surface geometry;
applying a mold insert (113) to the first intermediate surface (112), wherein the mold insert (113) is applied by a polyjet 3D printing process, and wherein the mold insert (113) comprises an optically precise surface (114) and wherein the optically precise surface (114) is configured to provide the designed optical device surface geometry to an optical device molded with the optical device mold section (110).

6. The method of claim 5, wherein the optically precise surface (114) is dimensionally oversized to compensate for abrasive wear during a polishing process, the method optionally further comprising polishing the optically precise surface (114) to a desired surface smoothness to produce a polished optically precise surface, wherein the polished optically precise surface is configured to provide the designed optical device surface geometry to an optical device molded with the optical device mold section (110).

7. The method of claim 5, wherein at least one of a) and b):-
a) the polyjet 3D printing process comprises addition of two or more successive layers of a mold insert material to the first intermediate surface (112);
b) the mold insert (113) is not subject to further tooling to substantially alter the optically precise surface (114) prior to use of the optical device mold section (110) to mold an optical device.

8. The method of claim 5, wherein at least one of a) and b):-
a) the mold insert material is the same as a mold section support material;
b) the mold insert (113) has a variable final thickness.

9. The method of claim 5, wherein at least one of a) and b):-
a) the mold insert material is applied in a layer thickness of less than about 15 µm.
b) the mold insert (113) has a maximum thickness of less than about 250 µm.

10. The method of claim 5, wherein the optically precise surface is asymmetric.

11. A method of molding an optical device comprising:
preparing an optical device mold as claimed in any of claims 1 to 4, wherein the first and second mold sections are configured to receive each other and to form a cavity between the intermediate surface (112) of said first mold section and a second mold section intermediate surface (122);
contacting the first mold section (110) and the second mold section (120) with an optical device forming composition, wherein the cavity formed between the first mold section (110) and the second mold section (120) is filled with optical device forming composition;
polymerizing the optical device forming composition to form an optical device comprising an optical surface geometry that is a negative of the optically precise surface (114).

## Patentansprüche

1. Form für eine optische Vorrichtung (100), Folgendes beinhaltend:
einen Formabschnitt (110), beinhaltend eine Formabschnitt-Stütze (111), wobei die Formabschnitt-Stütze (111) eine Zwischenfläche (112) beinhaltet, welche eine Oberflächengeometrie besitzt, welche konfiguriert ist, um sich einer konzipierten Oberflächengeometrie einer optischen Vorrichtung anzunähern;
einen additiven Formeinsatz (113), welcher eine optisch genaue Oberfläche (114) beinhaltet, welche an der Zwischenfläche (112) befestigt ist,
wobei der additive Formeinsatz anhand eines Polyjet 3D-Druckverfahrens gebildet wird, und wobei der additive Formeinsatz (113) konfiguriert ist, um einer mit der Form (100) geformten optischen Vorrichtung eine optisch genaue Oberflächengeometrie bereitzustellen.

2. Form nach Anspruch 1, bei welcher der Formeinsatz (113) zudem ein Oberflächenmerkmal beinhaltet, welches eine labyrinthische Geometrie aufweist.

3. Form nach Anspruch 1, bei welcher der Formeinsatz (113) an der Zwischenfläche (112) der Formabschnitt-Stütze (111) durch einen additiven Herstellungsprozess befestigt wird.

4. Form nach Anspruch 1, bei welcher die Form zwei oder mehr Formabschnitte (110, 120) beinhaltet, und wobei jeder Formabschnitt (110, 120) zudem einen Formeinsatz (113) beinhaltet.

5. Verfahren zum Vorbereiten eines Formabschnittes (110) für eine optische Vorrichtung, Folgendes beinhaltend:
Auswählen einer ersten Formabschnitt-Stütze (111), welche eine erste Zwischenfläche (112) mit einer ersten Oberflächengeometrie besitzt, welche konfiguriert ist, um sich einer konzipierten Oberflächengeometrie einer optischen Vorrichtung anzunähern;
Aufbringen eines Formeinsatzes (113) auf die erste Zwischenfläche (112), wobei der Formeinsatz (113) durch ein Polyjet 3D-Druckverfahren aufgebracht wird, und wobei der Formeinsatz (113) eine optisch genaue Oberfläche (114) beinhaltet und wobei die optisch genaue Oberfläche (114) konfiguriert ist, um der mit dem Formabschnitt (110) für die optische Vorrichtung geformten optischen Vorrichtung die konzipierte Oberflächengeometrie einer optischen Vorrichtung bereitzustellen.

6. Verfahren nach Anspruch 5, bei welchem die optisch genaue Oberfläche (114) dimensionsweise überdimensioniert ist, um Abrieb-Abnutzung im Zuge eines Polierverfahrens zu kompensieren, wobei wahlweise das Verfahren zudem Polieren der optisch genauen Oberfläche (114) auf eine gewünschte Oberflächenglätte beinhaltet, um eine polierte, optisch genaue Oberfläche zu erzielen, wobei die polierte, optisch genaue Oberfläche konfiguriert ist, um der mit dem Formabschnitt (110) für die optische Vorrichtung geformten optischen Vorrichtung die konzipierte Oberflächengeometrie einer optischen Vorrichtung bereitzustellen.

7. Verfahren nach Anspruch 5, bei welchem mindestens eines von a) und b) zutrifft:
a) das Polyjet 3D-Druckverfahren beinhaltet Addition von zwei oder mehr aufeinanderfolgenden Schichten eines Formeinsatzmaterials auf eine erste Zwischenfläche (112);
b) der Formeinsatz (113) wird keiner weiteren Bearbeitung unterworfen, um im Wesentlichen die optisch genaue Oberfläche (114) vor Gebrauch des Formabschnittes (110) für die optische Vorrichtung zum Formen einer optischen Vorrichtung zu verändern.

8. Verfahren nach Anspruch 5, bei welchem mindestens eines von a) und b) zutrifft:
a) das Formeinsatzmaterial ist dasselbe wie das Material der Formabschnitt-Stütze;
b) der Formeinsatz (113) besitzt eine variable Enddicke.

9. Verfahren nach Anspruch 5, bei welchem mindestens eines von a) und b) zutrifft:
a) das Formeinsatzmaterial wird mit einer Schichtdicke von unter ungefähr 15 µm aufgebracht.
b) der Formeinsatz (113) besitzt eine maximale Dicke von unter ungefähr 250 µm.

10. Verfahren nach Anspruch 5, bei welchem die optisch genaue Oberfläche symmetrisch ist.

11. Verfahren zum Formen einer optischen Vorrichtung, Folgendes beinhaltend:
Vorbereiten einer Form für eine optische Vorrichtung nach einem der Ansprüche 1 bis 4, wobei der erste und der zweite Formabschnitt konfiguriert sind, um einander aufzunehmen und um einen Hohlraum zwischen der Zwischenfläche (112) des ersten Abschnittes und einer Zwischenfläche (122) des zweiten Formabschnittes zu bilden;
Inkontaktbringen des ersten Formabschnittes (110) und des zweiten Formabschnittes (120) mit einer eine optische Vorrichtung bildenden Zusammensetzung, wobei der zwischen dem ersten Formabschnitt (110) und dem zweiten Formabschnitt (120) gebildete Hohlraum mit der eine optische Vorrichtung bildenden Zusammensetzung gefüllt ist;
Polymerisieren der eine optische Vorrichtung bildenden Zusammensetzung zum Bilden einer optischen Vorrichtung, welche eine optische Oberflächengeometrie besitzt, welche ein Negativ der optisch genauen Oberfläche (114) bildet.

## Revendications

1. Moule de dispositif optique (100), comprenant :
une section de moule (110) comprenant un support de section de moule (111), dans lequel le support de section de moule (111) comprend une surface intermédiaire (112) présentant une géométrie de surface configurée afin d'approcher une géométrie de surface d'un dispositif optique conçu ;
un insert de moule additif (113) comprenant une surface précise d'un point de vue optique (114) fixée à la surface intermédiaire (112),
dans lequel l'insert de moule additif est formé d'un processus d'impression en 3D polyjet, et dans lequel l'insert de moule additif (113) est configuré afin de fournir une géométrie de surface précise d'un point de vue optique à un dispositif optique moulé avec le moule (100).

2. Moule selon la revendication 1, dans lequel l'insert de moule (113) comprend en outre une caractéristique de surface présentant une géométrie en labyrinthe.

3. Moule selon la revendication 1, dans lequel l'insert de moule (113) est fixé à la surface intermédiaire (112) du support de la section de moule (111) par un processus de fabrication supplémentaire.

4. Moule selon la revendication 1, dans lequel le moule comprend deux sections de moule ou plus (110, 120) et dans lequel chaque section de moule (110, 120) comprend en outre un insert de moule (113).

5. Procédé de préparation d'une section de moule de dispositif optique (110) comprenant :
la sélection d'un premier support de section de moule (111) présentant une première surface intermédiaire (112) avec une première géométrie de surface intermédiaire configurée afin d'approcher d'une géométrie de surface de dispositif optique conçu ;
l'application d'un insert de moule (113) à la première surface intermédiaire (112), dans lequel l'insert de moule (113) est appliqué par un processus d'impression en 3D polyjet, et dans lequel l'insert de moule (113) comprend une surface précise d'un point de vue optique (114) et dans lequel la surface précise d'un point de vue optique (114) est configurée afin de fournir au dispositif optique moulé avec la section de moule de dispositif optique (110) la géométrie de surface de dispositif optique conçue.

6. Procédé selon la revendication 5, dans lequel la surface précise d'un point de vue optique (114) est dimensionnellement surdimensionnée afin de compenser l'usure abrasive pendant un processus de polissage, le procédé comprenant optionnellement en outre le polissage de la surface précise d'un point de vue optique (114) en vue d'une surface lisse souhaitée afin de produire une surface précise d'un point de vue optique polie, dans lequel la surface précise d'un point de vue optique polie est configurée afin de fournir la géométrie de surface de dispositif optique conçue au dispositif optique moulé avec la section de moule de dispositif optique (110).

7. Procédé selon la revendication 5, dans lequel au moins un de a) et b) :
a) le processus d'impression en 3D polyjet comprend l'addition de deux couches successives ou plus d'un matériau d'insert de moule à la première surface intermédiaire (112) ;
b) l'insert de moule (113) n'est pas soumis à un outillage ultérieur afin de modifier substantiellement la surface précise d'un point de vue optique (114) avant l'utilisation de la section de moule du dispositif optique (110) afin de mouler un dispositif optique.

8. Procédé selon la revendication 5, dans lequel s'avère au moins un de a) et b) :
a) le matériau d'insert de moule est le même que le matériau de support de la section de moule ;
b) l'insert de moule (113) présente une épaisseur finale variable.

9. Procédé selon la revendication 5, dans lequel s'avère au moins un de a) et b) :
a) le matériau d'insert de moule est appliqué dans une épaisseur de couche inférieure à environ 15 µm.
b) l'insert de moule (113) présente une épaisseur maximale inférieure à environ 250 µm.

10. Procédé selon la revendication 5, dans lequel la surface précise d'un point de vue optique est asymétrique.

11. Procédé de moulage d'un dispositif optique comprenant :
la préparation d'un moule de dispositif optique selon l'une quelconque des revendications 1 à 4, dans lequel la première et la seconde section de moule sont configurées afin de se recevoir réciproquement et afin de former une cavité entre la surface intermédiaire (112) de ladite première section de moule et une surface intermédiaire de la section de moule (122) ;
la mise en contact de la première section de moule (110) et de la seconde section de moule (120) avec une composition formant dispositif optique, dans lequel la cavité formée entre la première section de moule (110) et la seconde section de moule (120) est remplie de la composition formant dispositif optique ;
la polymérisation de la composition formant dispositif optique permettant de former un dispositif optique comprenant une géométrie de surface optique qui est un négatif de la surface précise d'un point de vue optique (114).
